# EUROPEAN PATENT SPECIFICATION

(11) **EP 4 633 354 B1**
(45) Date of publication and mention of the grant of the patent: **30.09.2026**
(21) Application number: 23841443.7
(22) Date of filing: 07.12.2023
(51) Int. Cl.: A01D 34/00

(54) **AUTONOMOUS GROUND WORKING VEHICLE SYSTEM AND VEHICLE CLEANING SYSTEM FOR USE WITH SAME**
AUTONOMES BODENARBEITSFAHRZEUGSYSTEM UND FAHRZEUGREINIGUNGSSYSTEM ZUR VERWENDUNG DAMIT
SYSTÈME DE VÉHICULE DE TRAVAIL AU SOL AUTONOME ET SYSTÈME DE NETTOYAGE DE VÉHICULE DESTINÉ À ÊTRE UTILISÉ AVEC CELUI-CI

(30) Priority: 13.12.2022 US 202263432167 P
(43) Date of publication of application: 22.10.2025
(60) Divisional application: 26199907.2
(73) Proprietor: The Toro Company, Bloomington, MN 55420-1196 (US)
(72) Inventor: FRICK, Alexander Steven, Bloomington, Minnesota 55420-1196 (US); SAUBER, Daniel John, Bloomington, Minnesota 55420-1196 (US)
(74) Representative: J A Kemp LLP
(86) International application number: PCT/US2023/082899
(87) International publication number: WO 2024/129504

(56) References cited:
- EP-A1- 3 763 190
- EP-A2- 2 158 802
- WO-A1-2016/097892

## Description

Embodiments of the present disclosure are directed to autonomous ground working vehicle systems or, more particularly, to base stations, cleaning systems, and methods for use with the same.

### BACKGROUND

Ground working vehicles are known for performing a variety of tasks. For instance, powered lawn mowers are used by both homeowners and professionals alike to maintain grass areas within a property.

In recent years, robotic lawn mowers adapted to autonomously mow have become more prevalent. These mowers typically operate unattended within a predefined boundary of a property, relying upon various boundary detection capabilities to ensure the mower is constrained to specific work areas within the predefined boundary. EP3763190A1 discloses a cleaning system that includes a mower that executes a mowing work while traveling autonomously, and a cleaning station that cleans the mower, the cleaning system includes: an acquirer that acquires dirt information relating to a state of dirt of the mower, a determiner that determines at least one of a necessity of cleaning the mower, and a method of cleaning the mower, based on the dirt information.

Typically, autonomous mowers periodically return to a base station during periods of inactivity to, for example, recharge onboard batteries that power the mower.

### SUMMARY

The invention is defined in claim 1. Further aspects and preferred embodiments are defined in the dependent claims. Any aspects, embodiments and examples of the present disclosure which do not fall under the scope of the appended claims do not form part of the invention and are merely provided for illustrative purposes. Embodiments described herein provide an autonomous ground working vehicle system that includes: an autonomous ground working vehicle including an undercarriage; and a base station configured to receive the vehicle. The base station includes: a fluid connector adapted to fluidly couple to a fluid source; a platform including at least one pop-up wash nozzle coupled to the fluid connector by a fluid conduit associated with the platform, the nozzle translatable between a retracted position and an extended position; and a flow control valve positioned along the fluid conduit. The valve, when in a first position, obstructs flow of fluid from the fluid source to the pop-up wash nozzle, and when in a second position, directs the fluid from the fluid source to the pop-up wash nozzle such that the nozzle is able to expel the fluid toward the undercarriage of the vehicle.

The above summary is not intended to describe each embodiment or every implementation. Rather, a more complete understanding of illustrative embodiments will become apparent and appreciated by reference to the following Detailed Description of Illustrative Embodiments and claims in view of the accompanying figures of the drawing.

### BRIEF DESCRIPTION OF THE VIEWS OF THE DRAWING

Illustrative embodiments will be further described with reference to the figures of the drawing, wherein:
FIG. 1A is a top perspective view of an autonomous ground working vehicle system in accordance with one or more embodiments of the present disclosure;
FIG. 1B is a top perspective view of an autonomous ground working vehicle system in accordance with one or more embodiments of the present disclosure;
FIG. 2 is a diagrammatic view of an autonomous ground working vehicle in accordance with one or more embodiments of the present disclosure;
FIG. 3 is a bottom perspective view of an autonomous ground working vehicle in accordance with one or more embodiments of the present disclosure;
FIG. 4 is a top perspective view of an autonomous ground working vehicle base station in accordance with one or more embodiments of the present disclosure;
FIG. 5 is a side elevation view of an autonomous ground working vehicle base station in accordance with one or more embodiments of the present disclosure;
FIG. 6 is a diagrammatic view of an autonomous ground working vehicle base station incorporating a cleaning system in accordance with one or more embodiments of the present disclosure;
FIG. 7 is a diagrammatic view of an autonomous ground working vehicle system incorporating a cleaning system in accordance with one or more embodiments of the present disclosure;
FIG. 8 is a top perspective view of an autonomous ground working vehicle base station in accordance with one or more embodiments of the present disclosure;
FIG. 9 is a block diagram illustrating a method of washing an autonomous ground working vehicle in accordance with one or more embodiments of the present disclosure; and
FIG. 10 is a block diagram illustrating a method of washing an autonomous ground working vehicle in accordance with one or more embodiments of the present disclosure.

The figures are rendered primarily for clarity and, as a result, are not necessarily drawn to scale. Moreover, various structure/components, including but not limited to fasteners, electrical components (wiring, cables, etc.), and the like, may be shown diagrammatically or removed from some or all of the views to better illustrate aspects of the depicted embodiments, or where inclusion of such structure/components is not necessary to an understanding of the various illustrative embodiments described herein. The lack of illustration/description of such structure/components in a particular figure is, however, not to be interpreted as limiting the scope of the various embodiments in any way.

### DETAILED DESCRIPTION OF ILLUSTRATIVE EMBODIMENTS

In the following detailed description of illustrative embodiments, reference is made to the accompanying figures of the drawings which form a part hereof. It is to be understood that other embodiments, which may not be described and/or illustrated herein, are certainly contemplated.

All headings provided herein are for the convenience of the reader and should not be used to limit the meaning of any text that follows the heading, unless so specified. Moreover, unless otherwise indicated, all numbers expressing quantities, and all terms expressing direction/orientation (e.g., vertical, horizontal, parallel, perpendicular, etc.) in the specification and claims are to be understood as being modified in all instances by the term "about." The term "and/or" (if used) means one or all of the listed elements or a combination of any two or more of the listed elements. "I.e." is used as an abbreviation for the Latin phrase *id est* and means "that is." "E.g." is used as an abbreviation for the Latin phrase *exempli gratia* and means "for example."

Examples of the present disclosure are directed generally to autonomous working vehicle systems (including an autonomous vehicle or machine) and methods for cleaning or washing the vehicle. The terms "cleaning" and "washing" and variations thereof may be used interchangeably herein. An illustrative autonomous vehicle is described and illustrated herein as a robotic, autonomous lawn mower, and the terms "mower" and "vehicle" may be used interchangeably herein.

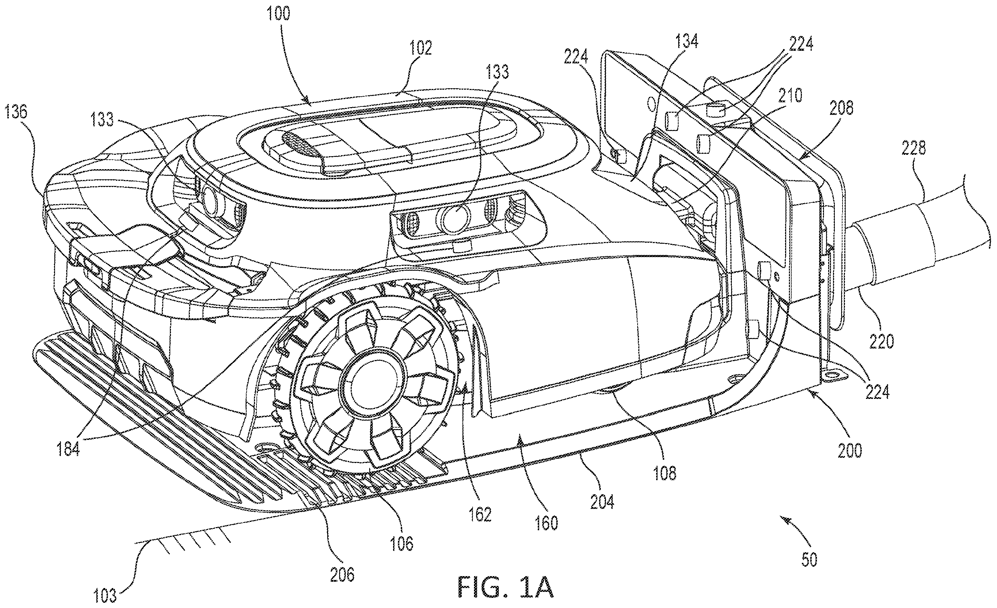

It is noted that the terms "have," "include," "comprises," and variations thereof do not have a limiting meaning, and are used in their open-ended sense to generally mean "including, but not limited to," where the terms appear in the accompanying description and claims. Further, "a," "an," "the," "at least one," and "one or more" are used interchangeably herein. Moreover, relative terms such as "left," "right," "front," "fore," "forward," "rear," "aft," "rearward," "top," "bottom," "side," "upper," "lower," "above," "below," "horizontal," "vertical," and the like may be used herein and, if so, are from the perspective shown in the particular figure, or while the autonomous ground working vehicle and/or base station is resting upon a ground surface as shown in, for example, FIG. 1A. These terms are used only to simplify the description, however, and not to limit the interpretation of any embodiment described.

In some embodiments, the autonomous vehicle may learn and subsequently recognize a boundary of the work region using an onboard machine vision system and, optionally, other non-vision-based sensors. The vision system may utilize one or more cameras that together form part of a navigation system, as described more fully in U.S. Pat. App. Pub. Number US2020/0050208 published February 13, 2020.

Systems and methods in accordance with embodiments of the present disclosure may include a dock or base station to which the vehicle may return when not operating. One function of the base station is to permit charging/re-charging of one or more battery packs associated with the vehicle that provide power to various vehicle systems (e.g., working implement or propulsion).

During an autonomous work operation (e.g., mowing a lawn) or over the course of multiple autonomous work operations, the autonomous ground working vehicle may accumulate debris (e.g., dirt, grass, sand, organic matter, etc.), which can reduce the effectiveness of the vehicle. For example, accumulated debris may reduce effectiveness of the vehicle's working implement (such as by dulling the cutting blades or interfering with the working implement's powered movement/rotation) and may interfere with the vehicle's drive system, such as by clogging drive wheels, impeding free rotation of caster wheels, or reducing traction between the drive wheels and the ground surface.

Accumulation of debris may be aggravated by operation in wet conditions, where moisture can cause the debris to clump and more readily stick to vehicle surfaces. Wet conditions can also aggravate negative impacts of debris accumulation on the vehicle's effectiveness. For example, once dried, caked-on debris may interfere with vehicle operation.

To address potential debris accumulation in this context, systems and methods in accordance with embodiments of the present disclosure may provide washing of the vehicle. Washing may be performed or facilitated by the base station or a sub-surface irrigation head. The base station and the vehicle may each include wash nozzles to wash the vehicle by expelling or directing a fluid, such as water or a cleaning solution, at surfaces and components of the vehicle where debris may accumulate, such as the underside or undercarriage of the vehicle. By providing regular washing of the vehicle, debris accumulation can be minimized and operational efficiency of the vehicle maintained.

In some examples according to the present disclosure, the vehicle may be washed automatically, such as according to a schedule. In such examples, the schedule may be managed automatically and may take into account such factors as debris detected on the vehicle and work operations (e.g., number, type, or duration of work operations) executed since the last washing operation.

In other examples according to the present disclosure, the system may include sensors, for example, to detect debris accumulation or operational effectiveness of various systems and functions of the vehicle.

In still other examples according to the present disclosure, the wash nozzles may target designated wash zones or components of the vehicle, for example, where debris is likely to accumulate or otherwise impact the vehicle's operational performance.

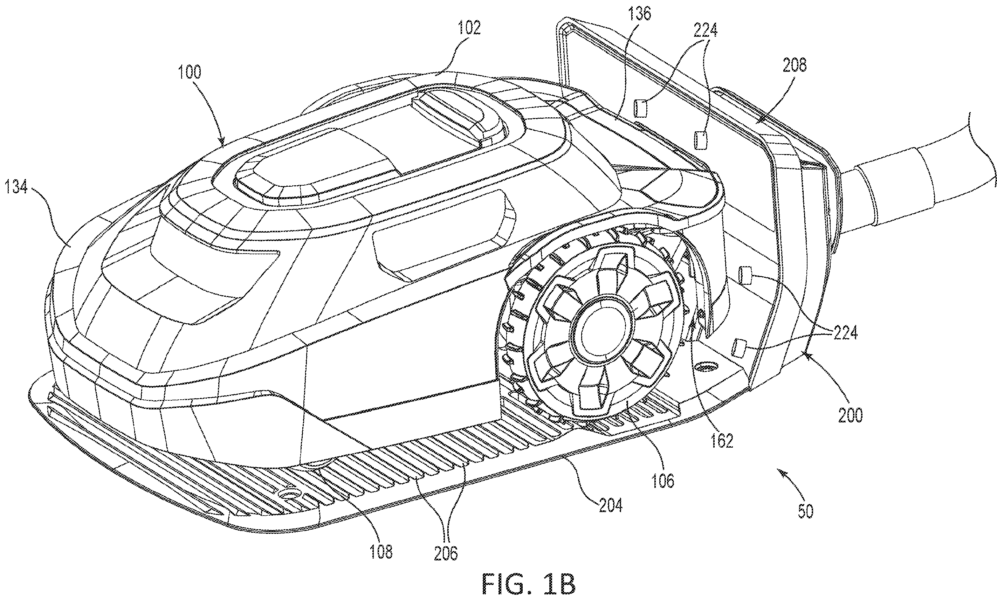

With reference to the figures of the drawing, wherein like reference numerals designate like parts and assemblies throughout the several views, each of FIGS. 1A and 1B shows an illustrative autonomous ground working vehicle system 50 including an autonomous ground working vehicle 100, and a base station 200 configured to receive the vehicle 100 (e.g., during periods when the vehicle 100 is being washed, charging, or otherwise not operating). While discussion of FIGS. 1A and 1B herein primarily references FIG. 1A, discussion of FIG. 1A may apply equally to FIG. 1B, unless otherwise indicated. Likewise, discussion of FIG. 1B may apply equally to FIG. 1A, unless otherwise indicated.

FIG. 1A shows the illustrative autonomous ground working vehicle 100 configured as a mower, which forms part of the autonomous ground working vehicle system 50. As further shown in FIG. 1A, the vehicle 100 may include a vehicle housing 102 (e.g., which may include a frame or chassis (not shown) and an exterior shroud) that carries and/or encloses various components of the vehicle 100, as described below. The vehicle 100 may further include ground support members, such as wheels, rollers, skids, or tracks. In the illustrated embodiments, the ground support members include one or more rear wheels 106 and one or more front wheels 108, that support the vehicle housing 102 upon a ground (grass) surface 103 and upon a receiving surface of the base station 200. As illustrated, the front wheels 108 are used to support a front-end portion 134 of the vehicle housing 102 and the rear wheels 106 are used to support a rear-end portion 136 of the housing.

With further reference to FIG. 1A, the base station 200 may include a platform 204 upon which the vehicle 100 may be received for charging or vehicle washing operations and may rest during charging or vehicle washing operations. The platform 204 may be generally horizontal, as shown in FIG. 1A. In some embodiments, the platform 204 may be generally sloped or otherwise shaped to allow fluid to flow or drain across the platform. The platform 204 may include friction elements 206 to provide traction assistance to the wheels (e.g., the rear wheels 106) during movement of the vehicle 100 onto/off of the platform 204. The base station 200 may also include a base station housing 208.

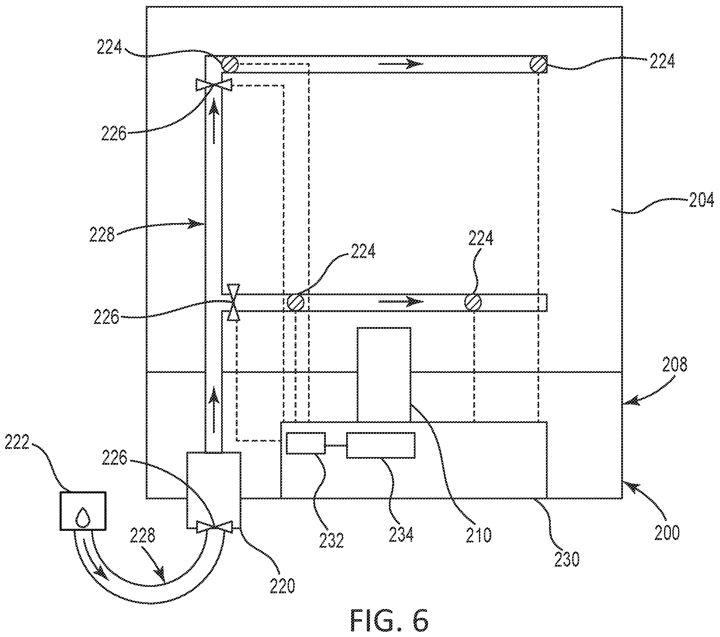

The base station housing 208 may enclose various electronic components of the base station 200, such as a base station controller 230 (shown in FIG. 6) to monitor and control various functions and systems of the base station 200. The base station housing 208 may also support charging contacts 210 that engage with corresponding contacts (not shown) on the vehicle 100. As illustrated by FIG. 1A, the corresponding contacts on the vehicle 100 may be on the front-end portion 134. The vehicle charging contacts may alternatively or additionally be on the rear-end portion 136 of the vehicle 100, as illustrated by FIG. 1B.

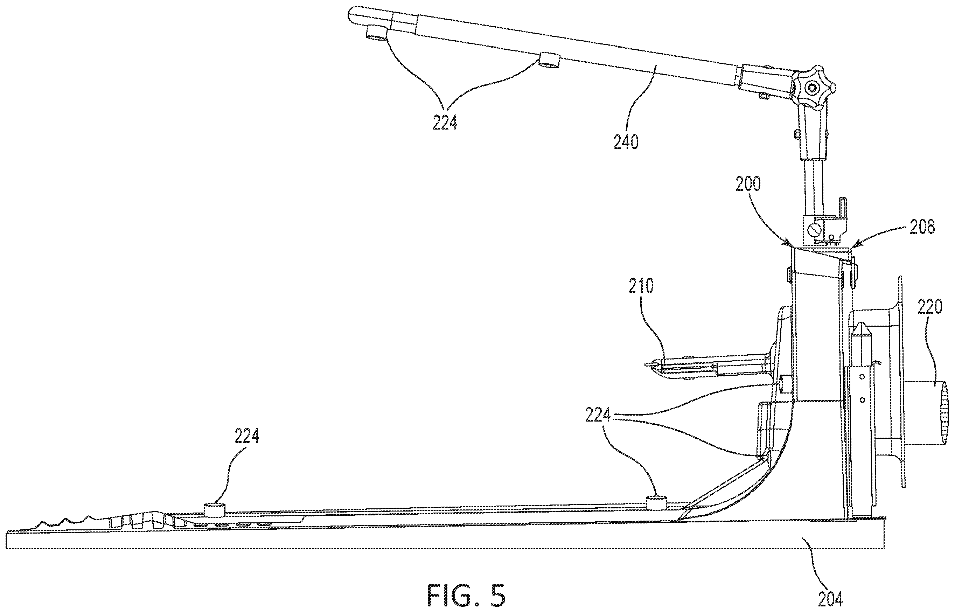

In some embodiments, the base station housing 208 is generally vertical, resulting in the base station 200 having a rotated "L"-shape, as shown clearly in FIG. 5. In one or more embodiments, at least a portion of the base station housing 208 may form at least a portion of the platform 204. For example, the platform 204 may be the top portion of an enclosure forming at least part of the base station housing 208. The base station housing 208 may also support a top cover 240, as shown in FIG. 5. The top cover 240 may, for example, provide shelter from the sun (e.g., for thermal management of the system 50) or support photovoltaic cells to provide power to the vehicle 100 or the base station 200, or both.

The base station 200 may further include a fluid connector 220, which may be disposed on the base station housing 208 (as shown in FIGS. 1A, 4, and 5) or on the platform 204. As shown in FIG. 1A, the fluid connector 220 may fluidly couple via a fluid conduit 228 to a fluid source 222 (see FIG. 6).

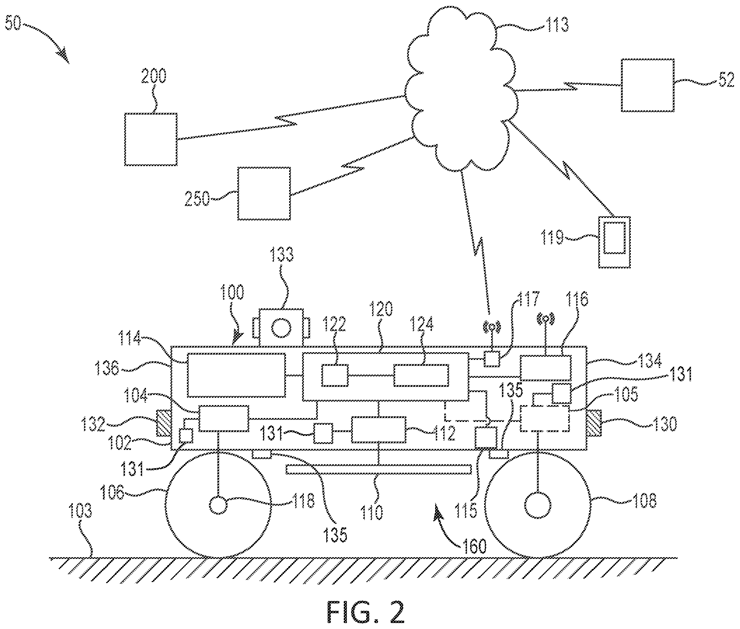

With reference to FIG. 2, one or both rear wheels 106 of the vehicle 100 may be driven by a propulsion system (e.g., including one or more electric wheel motors 104, i.e., traction motors or drive motors) to propel the vehicle 100 over the ground surface 103. In some embodiments, the front wheels 108 may freely caster relative to the vehicle housing 102 (e.g., about vertical axes). In such a configuration, mower direction may be controlled via differential rotation of the two rear wheels 106 in a manner similar to a conventional zero-turn-radius (ZTR) riding mower. That is to say, the propulsion system may include a separate wheel motor 104 for each of a left wheel and right wheel (e.g., the rear wheels 106) so that speed and direction of each rear wheel may be independently controlled. In addition, or alternatively, the front wheels 108 may be actively steerable (e.g., including one or more steer motors 105) to assist with control of the vehicle 100 direction. In one or more embodiments, the front wheel 108 may be driven by the propulsion system (i.e., to provide a front-wheel or all-wheel drive mower).

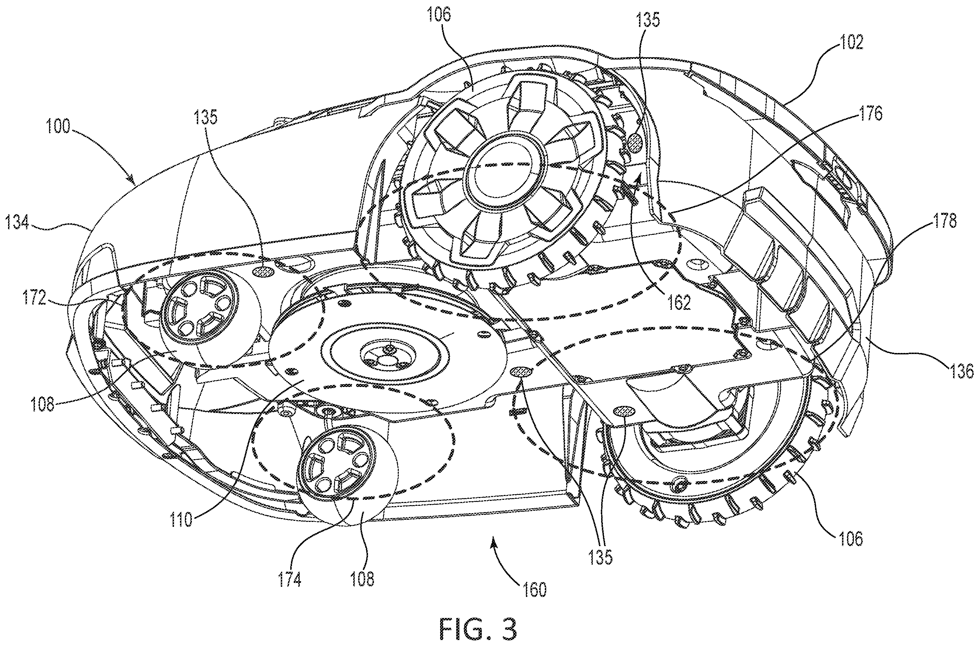

A ground working implement 110 or other working tool (e.g., a grass cutting element, such as a cutting blade) may be coupled to an implement motor 112 carried by the vehicle housing 102. When the implement motor 112 is energized, the ground working implement 110 rotates or otherwise activates. When the motors 112 and 104 are energized on a vehicle including a cutting blade, such as in embodiments according to FIG. 3, the vehicle 100 may be propelled over the ground surface 103 such that vegetation (e.g., grass) over which the vehicle 100 passes is cut by the rotating blade. While illustrated herein using only one ground working implement 110 and one implement motor 112, vehicles incorporating multiple implements or blades, powered by single or multiple motors, are contemplated within the scope of this disclosure. Moreover, while described herein in the context of one or more spinning "blades," other cutting elements including, for example, disks, nylon string or line elements, knives, cutting reels, etc. are certainly possible without departing from the scope of this disclosure. Still further, embodiments combining various cutting elements (e.g., a rotary blade with an edge-mounted string trimmer) are also contemplated.

In some embodiments, the vehicle 100 includes an undercarriage 160, which generally includes surfaces and components of the vehicle 100 proximate to or facing the ground surface 103 during operation of the vehicle 100. The undercarriage 160 may include, for example, the ground working implement 110, the front wheels 108, and the rear wheels 106. The undercarriage 160 may also include at least portions of the vehicle housing 102, such as portions of the vehicle housing 102 proximate to the front wheels 108, portions of the housing proximate to the rear wheels 106, and portions of the housing proximate to the working implement 110. The undercarriage 160 may further include generally downward- or ground-facing recesses in the vehicle housing 102, such as wheel wells 162 (see FIG. 1A). The undercarriage 160 may, still further, generally include portions of the vehicle housing 102 closest to the ground surface 103.

In one or more embodiments, the vehicle housing 102 may include one or more wash zones to organize or direct washing operations. The wash zones may be adjacent to, overlapping, or independent of each other. For example, as illustrated in FIG. 3, the undercarriage 160 may include or define a plurality of wash zones (e.g., wash zones 172, 174, 176, 178), which may correspond to surfaces or areas where debris accumulation is expected or found. In FIG. 3, the wash zones 172, 174, 176, 178 correspond with surfaces of and proximate to the wheels 106, 108. Wash zones may alternatively or additionally correspond, for example, with surfaces of and proximate to the ground working implement 110, surfaces of the wheels 106, 108, the wheel wells 162, and other surfaces where debris may accumulate or where accumulated debris may affect operation of the vehicle 100.

Wash zones (e.g., the wash zones 172, 174, 176, 178) may be defined (i.e., designated) using any suitable method. The wash zones may be defined, for example, for a particular model or group of models of autonomous vehicle (e.g., by the manufacturer). For another example, the wash zones may be at least partly defined by an end user (e.g., by using a remote computer 119; see FIG. 2).

As further shown in FIG. 2, the vehicle 100 may further include a power source, which in one embodiment, is a battery pack 114 (the terms "battery" and "battery pack" are used interchangeably herein) having a lithium-based chemistry (e.g., lithium-ion). Other embodiments may utilize batteries of other chemistries, or other power source technologies altogether (e.g., solar power, fuel cell, internal combustion engines, etc.), without departing from the scope of this disclosure. It is further noted that, while shown as using independent implement and wheel motors, such a configuration is illustrative only, as embodiments wherein implement power and wheel power are provided by a single motor are also contemplated.

The vehicle 100 may further include one or more sensors to provide location data during operation. For instance, some embodiments may include a Global Navigational Satellite System (GNSS, e.g., global positioning system or "GPS") receiver 116 (or other position sensor that may provide similar data). The receiver 116 may be adapted to estimate a position of the vehicle 100 within a work region and provide such information to an electronic controller 120 (described below). In other embodiments, one or more of the wheels 106, 108 may include an encoder 118 that provides wheel rotation/speed information (odometry) that may be used to estimate mower position (e.g., based upon an initial start position) within a given work region. The vehicle 100 may also include a boundary wire sensor 115 adapted to detect a boundary wire, which could be used alternatively or in addition to computer vision-based navigational techniques.

The vehicle 100 may include one or more front obstacle detection sensors 130 and one or more rear obstacle detection sensors 132 (e.g., bump or lift sensors), as well as other sensors, such as side obstacle detection sensors (not shown). The obstacle detection sensors 130, 132 may be used to detect an obstacle in the path of the vehicle 100 when travelling in a forward or reverse direction, respectively (the vehicle 100 may be capable of mowing while moving in both forward and reverse directions). As illustrated, the sensors 130, 132 may be located at the front-end portion 134 and the rear-end portion 136 of the vehicle 100, respectively (or at any other suitable location on the vehicle 100).

The vehicle 100 may include one or more computer vision-based sensors to provide localization data, such as position, orientation, or velocity. The computer vision-based sensors may include one or more cameras 133 that capture or record digital image data for use with a vision system. The cameras 133 may be described as part of the vision system of the vehicle 100. Types of image data include, for example, training image data and/or operational image data. Other image data may include monitoring and security image data.

In some embodiments, the vehicle 100 includes four cameras 133. One camera 133 may be positioned in each of one or more directions including, for example, a forward-facing direction, a reverse-facing direction, a first (e.g., left) side-facing direction, and a second (e.g., right) side-facing direction, thereby forming Cardinal directions relative to the vehicle 100.

The vehicle 100 may also include the electronic controller 120 adapted to monitor and control various mower functions. The controller 120 may include a processor 122 that receives various inputs and executes one or more computer programs or applications stored in memory 124. The memory 124 may include computer-readable instructions or applications that, when executed (e.g., by the processor 122), cause the controller 120 to perform various calculations and/or issue commands. That is to say, the processor 122 and the memory 124 may together define a computing apparatus operable to process input data and generate the desired output to one or more components/devices. For example, the processor 122 may receive various input data including positional data from the GPS receiver 116 or the encoder 118 and generate speed and steering angle commands to the wheel motor 104 to cause the rear wheels 106 to rotate (at the same or different speeds and in the same or different directions). In other words, the controller 120 may control the steering angle and speed of the vehicle 100, as well as the speed and operation of the ground working implement 110.

Reference herein may be made to various parameters, data, or data structures, which may be managed in the controller 120, for example, by being processed by the processor 122 or stored in or retrieved from the memory 124. The controller 120 may use the processor 122 and the memory 124 in different systems. Additionally or alternatively, one or more processors 122 and memory 124 may be included in each different system. For example, in some embodiments, the controller 120 may form part of a vision system, which may include the processor 122 and the memory 124. The controller 120 may also at least partially define a navigation, a washing, and/or a charging system, each of which may also include a processor and memory the same or separate from the processor 122 and the memory 124 of the vision system.

Each system may also be described as having its own controller (such as the vehicle controller 120 or the base station controller 230, for example). For example, the vision system may be described as including a vision controller and the navigation system (or charging system) may be described as having its own separate navigation system controller (or charging system controller). In other words, the vehicle 100 may be described as having multiple controllers.

In the same respect, the base station 200 may include one or more of the base station controllers 230 (shown in FIG. 6) adapted to monitor and control various functions of the base station 200. The base station controller 230 may include a processor 232 and a memory 234. In general, as used herein, the term "controller" may be used to describe components of a system that receive inputs and provide outputs and commands to control various other components of a system.

In addition, and as illustrated in FIG. 2, a communication system may be provided to permit the vehicle 100/controller 120 to operatively communicate (e.g., via a wireless radio 117) with a communication network such as a wireless network 113, thereby allowing communication (e.g., bidirectional communication) between the vehicle 100 and other devices. For example, the wireless network 113 may be a cellular or other wide area network, a local area network (e.g., Institute of Electrical and Electronics Engineers (IEEE) 802.11 local "Wi-Fi" network), or a personal area or peer-to-peer network ("P2P," e.g., "Bluetooth" network). Other devices may communicate over the wireless network with the vehicle 100, including, for example, the remote computer 119, which may be configured, for example, as a cellular phone, tablet, desktop computer, notebook computer, or wearable computer. Preferably, the wireless network 113 is connected to the internet so that the user/remote computer 119 may interact with the communication system regardless of the user's location. Moreover, connection of the wireless network 113 to the internet allows communication with most any other remote computer including, for example, an internet (cloud)- based server 52.

The communication system may also permit communication over the wireless network with one or more other devices or systems, such as the base station 200, a sub-surface irrigation system 250, or both. Although not specifically illustrated, the communication system may include conventional network hardware including, for example, gateways, routers, and wireless access points (not shown).

While illustrated as using a centralized communication network (e.g., wherein each device connects to a central network), other embodiments may utilize a decentralized or ad-hoc network, wherein communication occurs directly between devices. Still further, while illustrated as primarily utilizing wireless communication protocols, such a configuration is not limiting as, for example, various devices (e.g., the base station 200, the sub-surface irrigation system 250, etc.) could connect to the communication network or other devices using wired connections without departing from the scope of this disclosure.

It will be readily apparent that the functionality of the vehicle controller 120 may be implemented in any manner known to one skilled in the art. For instance, the memory 124 may include any volatile, non-volatile, magnetic, optical, and/or electrical media, such as a random-access memory (RAM), read-only memory (ROM), non-volatile RAM (NVRAM), electrically-erasable programmable ROM (EEPROM), flash memory, or any other digital media. While shown as both being incorporated into the vehicle controller 120, the memory 124 and the processor 122 could be contained in separate modules.

The processor 122 may include any one or more of a microprocessor, a controller, a digital signal processor (DSP), an application specific integrated circuit (ASIC), a field-programmable gate array (FPGA), or equivalent discrete or integrated logic circuitry. In some embodiments, the processor 122 may include multiple components, such as any combination of one or more microprocessors, one or more controllers, one or more DSPs, one or more ASICs, or one or more FPGAs, as well as other discrete or integrated logic circuitry. The functions attributed to the vehicle controller 120 and the processor 122 herein may be embodied as software, firmware, hardware, or any combination of these. Certain functionality of the vehicle controller 120 may also be performed in the "cloud" (e.g., at the server 52) or other distributed computing systems operably connected to the processor 122.

In FIG. 2, schematic connections are generally shown between the controller 120 and the battery pack 114, the wheel motor 104, the implement motor 112, the boundary wire sensor 115, the wireless radio 117, and the GPS receiver 116. This interconnection is illustrative only, as the various subsystems of the vehicle 100 could be connected in most any manner, such as directly to one another, wirelessly, via a bus architecture (e.g., controller area network (CAN) bus), or any other connection configuration that permits data and/or power to pass between the various components of the vehicle 100. Although connections with some of the sensors are not shown, these sensors and other components of the vehicle 100 may be connected in a similar manner.

Likewise, it will be readily apparent that the functionality of the base station controller 230 may be implemented in any manner known to one skilled in the art including implementation of the base station processor 232, and the memory 234, such as those described herein with respect to the vehicle controller 120, the processor 122, and the memory 124.

While the figures show each of the base station 200 and the vehicle 100 including a respective electronic controller (e.g., the base station controller 230 and the vehicle controller 120) configured to control features and functions of the base station 200 and the vehicle 100, respectively, other configurations are possible without departing from the scope of this disclosure. In one or more embodiments, an electronic system controller may be associated with the base station 200 (e.g., inside of or attached to the base station housing 208) and configured to control features and functions of each of the base station 200 and the vehicle 100 using, for example, direct connection via the base station contacts 210 or wireless communication. Likewise, the electronic system controller may be associated with the vehicle 100 (e.g., inside of or attached to the vehicle housing 102) and configured to control features and functions of each of the vehicle 100 and the base station 200. Additionally or alternatively, the electronic system controller, or portions thereof, may be associated with each of vehicle 100 and the base station 200 and may be configured to control features and functions of each of the vehicle 100 and the base station 200.

The vehicle 100 may utilize vision and navigation systems to permit autonomous operation of the vehicle 100 within a given work region. For more information regarding exemplary operation and navigation of the vehicle 100, see U.S. Pat. App. Pub. Number US2020/0050208.

As shown in FIG. 2, the vehicle 100 may optionally include debris accumulation sensors, such as external debris accumulation sensors 135 and internal debris accumulation sensors 131. The external debris accumulation sensors 135 may be configured to detect accumulation of debris on the outer surfaces of the vehicle 100. The internal debris accumulation sensors 131 may be configured to detect effects of debris accumulation on the operation of the vehicle 100. For example, the internal debris accumulation sensors 131 may be, or include, sensors to monitor the current or torque to the electric motors, such as the wheel motor 104, the optional steer motor 105, or the implement motor 112.

In embodiments, such as embodiments including the internal debris accumulation sensors 131 to monitor the current or torque to the implement motor 112, the implement motor 112 may be bogged down by accumulation of debris on or proximate to the ground working implement 110, which may be indicated by changes in (e.g., increased or decreased) current or torque to the implement motor 112. In such embodiments, the vehicle controller 120 may detect increased current or torque to the implement motor 112, which may indicate that washing is needed or, more particularly, that washing of the ground working implement 110 or surfaces proximate to the ground working implement 110 is needed.

In some embodiments, such as embodiments including the internal debris accumulation sensors 131 to monitor the current or torque to the wheel motors 104, the traction between the rear wheels 106 and the ground surface 103 may be reduced by accumulation of debris on the surfaces of the rear wheels 106, which may be indicated by decreased current or torque to the wheel motors 104, for example, if traction is lost and the rear wheels 106 slip or spin freely. In embodiments including the steer motor 105, decreased current or torque to the steer motor 105 may likewise indicate debris accumulation on the surfaces of the front wheels 108. In such embodiments, the vehicle controller 120 may detect decreased current or torque to the drive motor 104 (or the steer motor 105) below a specified threshold, which may indicate that washing is needed or, more particularly, that washing of the rear wheels 106 (or the front wheels 108) is needed.

Similarly, in one or more embodiments, such as embodiments including the internal debris accumulation sensors 131 to monitor the current or torque to the wheel motors 104 and/or the steer motors 105, the motors 104, 105 may be bogged down by accumulation of debris on or proximate to the propulsion systems, such as the rear wheels 106 or the front wheels 108, which may be indicated by increased current or torque to the wheel motors 104 (or the optional steer motors 105). In such embodiments the vehicle controller 120 may detect increased current or torque to the motors 104, 105 exceeding a specified threshold, which may indicate that washing is needed or, more particularly, that washing of the rear wheels 106 or the front wheels 108 is needed.

Additionally or alternatively, data from systems in addition to the internal debris accumulation sensors 131 may be monitored to detect debris accumulation, such as the encoder 118 or the GPS receiver 116. For example, data from the encoder 118 indicating a distance traveled by the vehicle 100 may be monitored in combination with data from the internal debris accumulation sensor 131 monitoring current to the wheel motors 104 to detect whether current being used to travel is over a specified threshold, which may indicate the drive wheels (e.g., the rear wheels 106) need to be washed.

In other words, data from the encoder 118 and data from the internal debris accumulation sensor 131 may be combined to monitor efficiency of the powered movement of the vehicle 100, for example, in terms of amp-hours used per meter traveled or amp-hours used per mile traveled. That is to say, debris accumulation on or proximate to the propulsion systems, may be indicated by a resulting loss of efficiency in powered movement of the vehicle 100.

Such a loss of efficiency in powered movement of the vehicle 100 may indicate, for example, that debris accumulation on the surfaces of the wheels 106, 108 has increased the effective diameter of the wheels 106, 108. In another example, loss of efficiency in powered movement may indicate debris accumulation on or proximate to the propulsion systems, such as the wheels 106, 108, which may increase friction, for example, on moving parts (e.g., friction between the wheels 106, 108 and the vehicle housing 102).

In another example, data from systems such as the GPS receiver 116 and/or the optional boundary wire sensor 115 may indicate "out of bounds" events when the vehicle 100 is unable to stay inside the work zone. "Out of bounds" events may occur, for example, when the vehicle 100 is unable to maintain traction on a hill and slides downhill, out of the work zone. An increase in such "out of bounds" events may indicate, for example, reduced traction caused by accumulation of debris on the surfaces of the wheels 106, 108. Occurrence of "out of bounds" events or increased occurrence of such events over a specified threshold (e.g., more than 2 events per work operation, more than 5 events per work operation, more than 2 events per hour of operation, or more than 5 events per hour of operation) may be detected by the vehicle controller 120, which may indicate that washing is needed.

Responsive to data from the internal debris accumulation sensors 131 or data from the external debris accumulation sensors 135, the vehicle controller 120 may generate a command or send a signal to the base station 200 to perform a vehicle washing operation. The command or signal may be, or include, an indication of which systems/surfaces should be targeted for washing based on data from the sensors. Additionally or alternatively, the vehicle controller 120 may send the sensor data to the base station 200. Likewise, the base station controller 230 may generate a signal, or command, to perform a vehicle wash operation.

In some embodiments, the external debris accumulation sensors 135 may be associated with the vehicle 100. FIG. 3 shows a perspective view of the vehicle 100 from below to illustrate possible placements of the external debris accumulation sensors 135 associated with the vehicle 100. The external debris accumulation sensors 135 may be disposed, for example, on the vehicle housing 102, on the undercarriage 160, or even potentially on the ground working implement 110, or the wheels 106, 108.

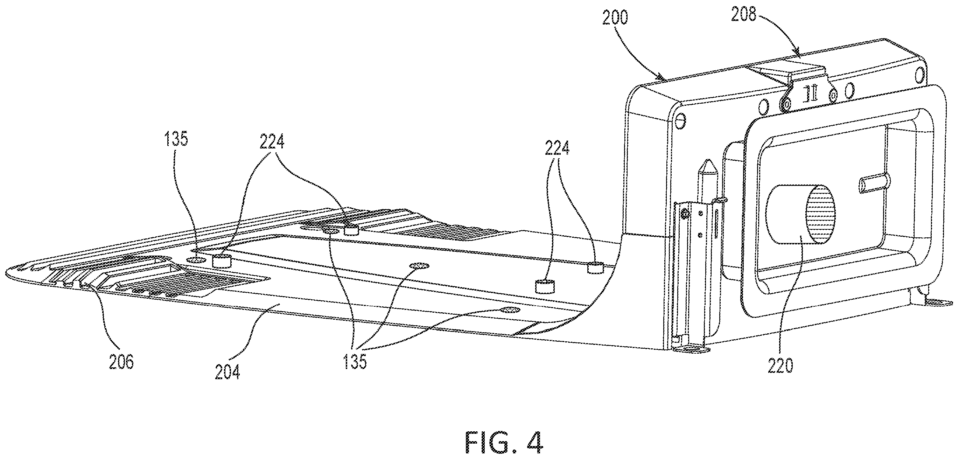

The external debris accumulation sensors 135 may additionally or alternatively be associated with the base station 200, such as disposed on or in the base station housing 208, disposed on or in the platform 204 (as shown in FIG. 4) or disposed proximate to the base station 200. For example, the external debris accumulation sensors 135 may be, or include, a vision sensor, such as one or more photoemitters associated with the base station 200 and one or more corresponding photodiodes associated with the vehicle 100. That is to say, a photoemitter on the base station 200 may emit light (e.g., infrared light) sensed by a respective photodiode on the vehicle 100 and the strength of the light sensed by the photodiode may be representative of debris accumulation on the vehicle 100. Additionally or alternatively, photoemitters on the vehicle 100 may emit light sensed by respective photodiodes on the base station 200.

In one or more embodiments, the external debris accumulation sensors 135 may be placed according to expected debris accumulation. For example, the external debris accumulation sensors 135 may be placed where debris is expected or found to accumulate, such as on or proximate to the ground working implement 110, on or proximate to the rear wheels 106, or on or proximate to the front wheels 108. In another example, the external debris accumulation sensors 135 may be placed where accumulated debris is expected or found to be resistant to removal, such as in the wheel wells 162 or behind the ground working implement 110. Other examples of placement for the external debris accumulation sensors 135 may include, for example, surfaces where accumulation of debris is expected or found to cause substantial impact (e.g., on or proximate to exposed moving parts such as caster wheels and working implements) and where debris is not likely to accumulate (and may therefore indicate a general debris accumulation and a general need for a vehicle washing operation).

In some embodiments, one or more external debris accumulation sensors 135 may each correspond to one or more wash zones. For example, as shown in FIG. 3, each wash zone may include, or be associated with, an external debris accumulation sensor (e.g., the external debris accumulation sensor 135 associated with the wash zone 172 or the external debris accumulation sensor 135 associated with the wash zone 178).

The external debris accumulation sensors 135 may be, or include, any suitable sensor or combination of sensors. Suitable debris accumulation sensors may be, or include, for example, capacitive sensors, ultrasonic sensors, and vision sensors. Suitable vision sensors may be, or include, for example, optical sensors, cameras, photoelectric sensors, and photodiodes. Vision sensors may further include photoemitters.

The external debris accumulation sensors 135 may also include distance sensors configured, for example, to detect debris accumulation on the perimetric surfaces of the rear wheels 106, the front wheels 108, or other surfaces prone to debris build up. Distance sensors may be any sensor suitable for measuring a distance. Suitable distance sensors may be, or include, for example, ultrasonic sensors or laser time-of-flight (ToF) sensors. In an embodiment including distance sensors, the distance sensors may be on the base station 200 (e.g., on the platform 204) to measure the distance to the rear wheels 106 when the vehicle 100 is in a specified position, such as in a charging position on the base station 200. In such an embodiment, if the measured distance between the distance sensor and the rear wheels 106 is below a specified threshold, the need for a wash may be indicated (e.g., because the accumulation of debris on the outside of the rear wheel 106 has effectively increased the diameter of the rear wheel 106).

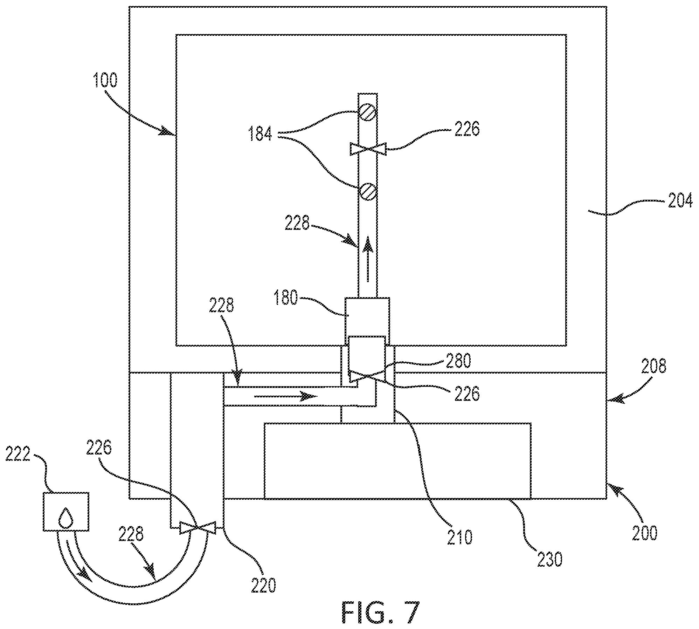

With reference to FIGS. 6 and 7, the base station 200 may include one or more wash nozzles 224 (as shown in FIG. 6) and the vehicle 100 may include one or more vehicle wash nozzles 184 (as shown in FIG. 7) to perform wash operations, such as by directing or expelling water at surfaces or components of the vehicle 100 as part of a vehicle wash operation. While discussion herein primarily references the wash nozzles 224, description of the wash nozzles 224 may apply equally to the vehicle wash nozzles 184, unless otherwise indicated.

The wash nozzles 224 may fluidly communicate with the fluid source 222 (e.g., household hose bib), for example, via one or more of the fluid conduits 228 (e.g., garden hose), one or more flow control valves 226, or one or more fluid connectors 220. The wash nozzles 224 may be adapted to fluidly couple to or de-couple from the fluid source 222 using valves integrated into the wash nozzles 224 or using the one or more flow control valves 226. The wash nozzles 224 may be of any suitable type. Suitable wash nozzle types may include, for example, nozzles, high-pressure nozzles, oscillating nozzles, rotary wash arms, and oscillating wash arms.

While, as shown in FIG. 6, the wash nozzles 224 may be included in the platform 204, the wash nozzles 224 may additionally or alternatively be included on any suitable portions or surfaces of the base station 200. For example, the wash nozzles 224 may be included on vertical surfaces of the base station housing 208 (as shown in FIGS. 1A, 1B, and 5) or horizontal portions of the base station housing 208 other than the platform 204 (as shown in FIG. 1A). For another example, the wash nozzles 224 may be included on upper portions of the base station housing 208 (shown in FIGS. 1A and 1B) or the top cover 240 (as shown in FIG. 5).

Including the wash nozzles 224 on vertical surfaces of the base station housing 208 may be advantageous, for example, to wash vertical surfaces of the vehicle 100, such as vertical surfaces of the vehicle housing 102, the front wheels 108, or the rear wheels 106 (as shown in FIG. 1B).

Likewise, including the wash nozzles 224 in the top cover 240 of the base station 200 may be advantageous, for example, to direct the wash fluid downward toward the top of the vehicle 100 to wash upper portions and upward-facing portions of the vehicle 100 and the vehicle housing 102. Similarly, including wash nozzles 224 on the upper portions of the base station housing 208, as shown in FIG. 1A, may be useful to wash the upper portions of the vehicle 100. Upper portions of the vehicle 100 may include, for example, surfaces of or proximate to the one or more cameras 133.

Additionally or alternatively, and as shown in FIG. 7, one or more vehicle wash nozzles 184 may be included on the vehicle 100, such as on the undercarriage 160 or on upper portions of the vehicle 100. Vehicle wash nozzles 184 may be advantageous for washing portions and surfaces of the vehicle 100 that may otherwise not be reached by fluid expelled from the wash nozzles 224 on the base station 200 (e.g., surfaces of and proximate to the working implement 110 or upper portions of the vehicle 100). Likewise, vehicle wash nozzles 184 may be advantageous for washing specific surfaces or components of the vehicle 100. For example, the vehicle wash nozzles 184 on upper portions of the vehicle 100, such as those shown in FIG. 1A, may direct fluid at the one or more cameras 133 to remove debris from the cameras 133.

In some embodiments, and as shown in FIG. 7, the vehicle wash nozzles 184 may fluidly connect via one or more fluid conduits 228 and one or more flow control valves 226 to a vehicle wash connector 180. The vehicle wash connector 180 may fluidly couple the fluid conduits 228 associated with the vehicle 100 to the fluid conduits 228 associated with the base station 200. The vehicle wash connector 180 may couple with a base station wash connector 280 on the base station housing 208, thereby enabling indirect fluid connection between the vehicle wash connector 180 and the fluid source 222. That is to say, when the vehicle 100 enters the base station 200, the vehicle 100 may receive fluid from the fluid source 222 by connecting the vehicle wash connector 180 to the base station wash connector 280. The base station wash connector 280 may be supported on the base station housing 208, for example, adjacent to the charging contacts 210. The vehicle wash nozzles 184 may be controlled by the vehicle controller 120 or the base station controller 230. Likewise, flow control valves 226 associated with the vehicle 100 may be controlled by the vehicle controller 120 or the base station controller 230.

The fluid conduits 228 may be associated with the vehicle 100 or the base station 200 (e.g., the platform 204 or the top cover 240). For example, the fluid conduits 228 may be fluid lines (e.g., flexible or molded hoses) attached to the base station 200 (e.g., the platform 204) or attached to the vehicle 100. In another example, the fluid conduits 228 may be fluid lines under or inside of the base station 200 or the vehicle 100. In still another example, the fluid conduits 228 may be channels integrated in (e.g., molded into) the base station 200 or the vehicle 100.

In one or more embodiments, the wash nozzles (e.g., the wash nozzles 224 or the vehicle wash nozzles 184) may be pop-up nozzles. In such embodiments, the wash nozzles 224 may be, for example, embedded or recessed in surfaces of the base station housing 208 such as the surfaces of the platform 204 (e.g., when not in use). The wash nozzles 224 may be substantially surrounded by or substantially flush with the adjacent surfaces (e.g., surfaces of the platform 204). When the wash nozzles 224 are in such a retracted position or configuration, the vehicle 100 may more easily traverse the platform 204. In the extended position, the wash nozzles 224 may pop up from or extend above the adjacent surfaces (e.g., during a washing operation).

Pop-up wash nozzles may be translatable between the retracted position and the extended position. The wash nozzles 224 may be actuated using any suitable method. In one or more embodiments, the pop-up wash nozzles 224 may be actuated by water-pressure provided by the fluid source 222. In other embodiments, the pop-up wash nozzles 224 may be actuated by mechanical or electrical actuators in response to commands from the base station controller 230 or the vehicle controller 120.

In some embodiments, the wash nozzles 224 may direct or expel fluid along an axis perpendicular to the horizontal plane (i.e., vertically or at a 90 degrees angle to the horizontal plane). In such embodiments, vertically-directed or expelled fluid may be useful for removal of debris from surfaces of the vehicle 100 (e.g., surfaces of the undercarriage 160) substantially parallel (e.g., parallel or nearly parallel) to the horizontal plane. Additionally or alternatively, the wash nozzles 224 may direct or expel fluid along an axis non-perpendicular to the horizontal plane (e.g., at an angle between 0 degrees and 90 degrees to the horizontal plane), or in a conical or frustoconical pattern. In such embodiments, angularly-directed or expelled fluid may be useful, for example, to remove debris from surfaces of the vehicle 100 not substantially parallel to the horizontal plane, such as substantially vertical (e.g., vertical or nearly vertical) surfaces of the vehicle housing 102 or the undercarriage 160. One or more of the wash nozzles 224 may each be configured to direct or expel fluid toward one or more respective wash zones (e.g., the wash zones 172, 174, 176, 178 shown in FIG. 3). For example, the base station 200 may include first and second wash nozzles 224 configured to expel or direct fluid toward at least first and second wash zones, respectively.

The base station 200 may further include the fluid connector 220 configured to fluidly communicate with the fluid source 222 and the wash nozzles 224. The fluid connector 220 may be disposed on the base station housing 208 of the base station 200. The fluid connector 220 may releasably couple with the fluid source 222. For example, where the fluid connector 220 is configured to couple with a typical garden hose (as shown in FIG. 1A), the fluid connector 220 may be a tubular structure with threading to releasably and securely receive the corresponding threading of the end of the garden hose.

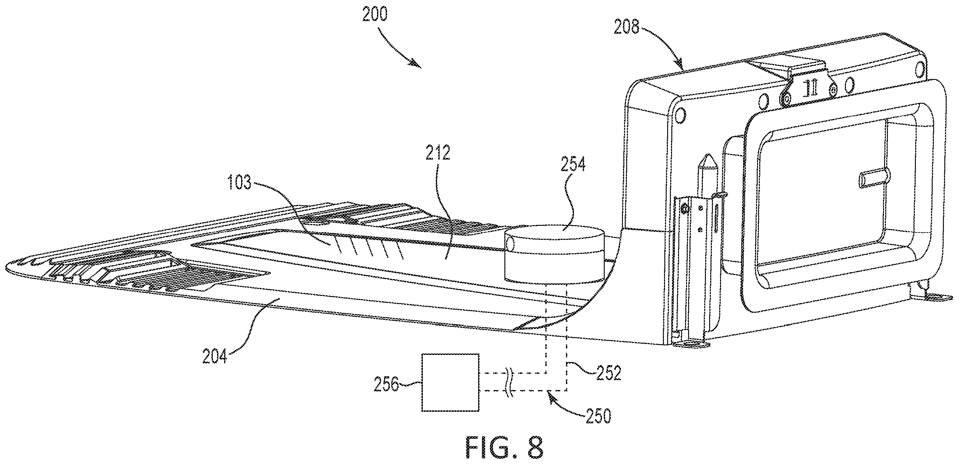

The fluid source 222 may be, or include, any suitable source of water or other fluid, or wash fluid, suitable for washing the vehicle 100, such as a washing solution of water and soap or detergent. Suitable wash fluid sources may include, for example, a water tap, a water spigot, or a water hose. As another example, and as shown in FIG. 8, the fluid source 222 may be an irrigation line of a sub-surface irrigation system, such as an irrigation line 252 of the sub-surface irrigation system 250. Suitable fluid sources may also include a fluid reservoir, such as a water tank or a bucket, which may be useful in applications and locations where running water is not readily available. In embodiments including a fluid reservoir as the fluid source 222, the fluid reservoir may be configured to provide water pressure, for example, by gravity or by pressurization (e.g., using a pump).

In some embodiments, fluid communication between the fluid connector 220 and the fluid source 222 is opened and closed by a valve, such as the flow control valves 226 (shown in FIG. 6). In other words, one or more of the flow control valves 226 may be adapted to fluidly couple and de-couple the fluid connector 220 to and from the fluid source 222. The flow control valves 226 may be of any suitable valve type. One or more of the flow control valves 226 may be manually operable by a user (e.g., a multi-turn valve or a quarter turn valve). In some embodiments, as discussed further below, the flow control valve 226 may be automatically controlled by an electronic controller, such as the base station controller 230.

In one or more embodiments, the base station controller 230 operably connects to systems of the base station 200, such as the flow control valves 226. The base station controller 230 may send commands, for example, to open one or more of the flow control valves 226, thus opening fluid communication, for example, between the fluid source 222 and the wash nozzles 224 (such as to begin a washing operation). The base station controller 230 may also send commands, for example, to close one or more of the flow control valves 226 to close fluid communication, for example, between the fluid source 222 and the wash nozzles 224 (such as to end a washing operation). In some embodiments, the controller 230 may also receive data from debris sensors (e.g., the internal debris accumulation sensors 131 or the external debris accumulation sensors 135) and/or the mower controller to control the washing operation.

Additionally or alternatively, the base station controller 230 may operably connect to the wash nozzles (e.g., the wash nozzles 224 or the vehicle wash nozzles 184). For example, in embodiments of the base station 200 including pop-up wash nozzles, the base station controller 230 may send commands to extend or retract the wash nozzles 224. In some embodiments, the wash nozzles 224 may include integrated valves. In such embodiments, the base station controller 230 may send commands to open or close the integrated valves of the wash nozzles 224.

In one or more embodiments, the base station controller 230 is configured to control operations of the wash system. Wash system operations may be, or include, for example, a vehicle washing operation to wash the vehicle 100 (e.g., during times when the vehicle 100 is received in the base station 200 and a need for the vehicle 100 to be washed is indicated) and/or an environmental irrigation operation to irrigate the environment (e.g., irrigating grass surrounding the base station 200 when the vehicle 100 is not received in the base station 200).

The base station 200 may perform a vehicle washing operation responsive to a signal from the vehicle controller 120 or independent of the vehicle controller 120, such as in response to data received from sensors (e.g., the internal debris accumulation sensors 131 or the external debris accumulation sensors 135). A vehicle washing operation may be automatically performed, for example, responsive to sensor data indicating a vehicle wash is needed (e.g., data from the internal debris accumulation sensors 131 indicating current or torque to the implement motor 112 has exceeded a specified threshold value or data from the external debris accumulation sensors 135 indicating debris accumulation has exceeded a specified threshold value), after a certain number of autonomous work operations (e.g., 1 or more, 2 or more, 5 or more, or 10 or more) have been completed by the vehicle 100 since the last vehicle washing operation, or after a certain duration of autonomous work operation (e.g., 30 minutes or more, 60 minutes or more, 90 minutes or more, or 120 minutes or more) has been performed by the vehicle 100 since the last vehicle washing operation.

Additionally or alternatively, a vehicle washing operation may be performed responsive to a user-generated signal (e.g., using the remote computer 119) or when the user manually opens one or more of the flow control valves 226.

The base station 200 may perform an environmental irrigation operation responsive to a signal from the vehicle controller 120 or independent of the vehicle controller 120. An irrigation operation may be automatically performed, for example, responsive to sensor data indicating the vehicle 100 is outside the effective range of the wash nozzles 224 (i.e., so that the mower will not obstruct water expelled by the wash nozzles 224 from reaching the grass surrounding the base station 200).

In some embodiments, the base station controller 230 may control one or more parameters of a washing operation, such as adjusting water/fluid pressure or flow, or targeting fluid directed to one or more wash zones (e.g., the wash zones 172, 174, 176, 178). For example, the base station controller 230 may increase fluid flow to the wash nozzles 224 corresponding respectively to heavily soiled wash zones based on debris accumulation or debris accumulation sensor data indicating the heavily soiled wash zones are in need of further or more intensive washing.

With further reference now to FIG. 8, an alternative embodiment of the base station 200 may additionally or alternatively (i.e., to the wash nozzles 224 described above) include an opening 212 in the base station housing 208 (shown in FIG. 8 as an opening in the platform 204) to permit access to the ground surface 103 through the base station housing 208. The opening 212 may be configured to align with a ground irrigation element, such as an irrigation head of a sub-surface irrigation system (e.g., the irrigation head 254 of the sub-surface irrigation system 250). In such embodiments, the irrigation head 254 may wash the vehicle 100 to remove debris (e.g., from the undercarriage 160) during periods when the vehicle 100 is received in the base station 200.

The irrigation head 254 may also irrigate the surrounding environment (e.g., a grass lawn) during periods when the vehicle 100 is not received in the base station 200. For example, the sub-surface irrigation system 250 may include an electronic irrigation controller 256 to monitor and control irrigation operations, such as lawn irrigation operations in a residential yard or on a golf course.

The irrigation controller 256 may communicate with one or both of the vehicle controller 120 and the base station controller 230 to coordinate irrigation operations and washing operations. For example, before an irrigation operation, the irrigation controller 256 may initiate or enter an irrigation mode, such as by coordinating with the vehicle controller 120 to move the vehicle 100 from the base station 200 (e.g., so the vehicle 100 does not block or obstruct water expelled from the irrigation head 254). For another example, to perform a vehicle washing operation, the base station controller 230 may coordinate with the irrigation controller 256 to initiate a vehicle wash mode including, for example, activating the irrigation head 254.

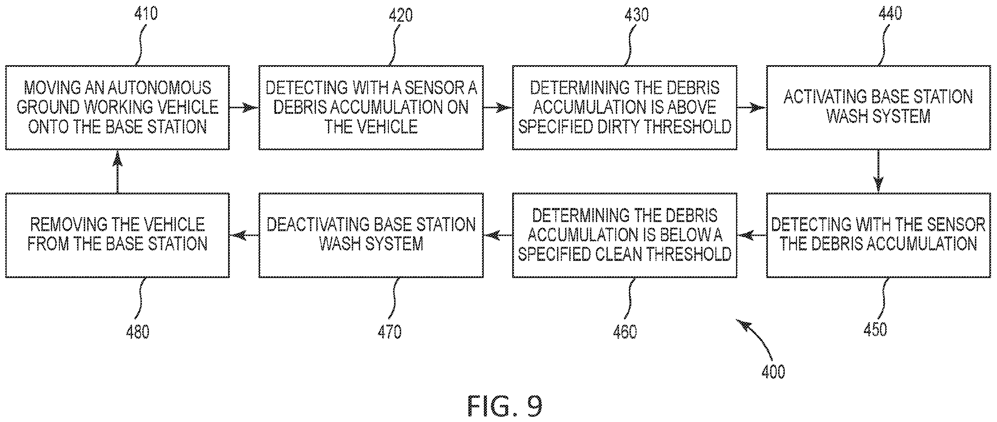

FIG. 9 shows an illustrative method 400 for washing the autonomous ground working vehicle 100 in accordance with embodiments of the present disclosure. While methods disclosed herein, such as the method 400, may be depicted as a number of steps in series, it will be apparent in light of the disclosure that the steps may be performed in any suitable order and the disclosure is not limited in this regard. For example, one or more steps may be performed concurrently.

The method 400 may include moving the vehicle 100 onto the base station 200 at 410. The vehicle 100 may move onto the base station 200, for example, in response to a signal or command from the controllers 120, 230 that a washing operation is needed or indicated. The moving the vehicle 100 onto the base station 200 at 410 may occur during a washing operation (i.e., after the base station wash system has been activated and the wash nozzles 224 are expelling water). Moving the vehicle 100 onto the base station 200 during a washing operation may be advantageous, for example, to remove debris (e.g., debris on surfaces that may not otherwise be washed by the wash fluid expelled from the wash nozzles 224 if the vehicle 100 is stationary, such as perimetric surfaces of the wheels 106, 108) as the vehicle 100 travels over the base station 200 and the wash nozzles 224.

In some embodiments, the moving the vehicle 100 onto the base station 200 at 410 may be responsive to determining that the vehicle 100 is in need of a wash, such as when one or more debris accumulation sensors 131, 135 indicate the debris accumulation is beyond a specified threshold. Additionally or alternatively, the moving onto the base station at 410 may be responsive to the vehicle 100 completing a working operation or needing to recharge, as two more examples.

The method 400 may also include detecting debris accumulation on the vehicle 100 at 420. Debris accumulation may be detected, for example, by sensors associated with the vehicle 100, sensors associated with the base station 200, the internal debris accumulation sensors 131, the external debris accumulation sensors 135, a vision sensor, a distance sensor, a sensor that monitors accumulated operating time of the vehicle 100, or a sensor that monitors accumulated distance that the vehicle 100 has traveled.

The detecting at 420 may be responsive, for example, to the vehicle 100 moving onto the base station 200 or the vehicle 100 completing a working operation. Additionally or alternatively, the detecting at 420 may be continuous (e.g., during working operations) or done at intervals (e.g., during working operations), such as every 1 second, every 10 seconds, every 30 seconds, every 1 minute, or every 5 minutes, as some examples.

Embodiments of the method 400 according to the present disclosure may include determining, at 430, that the debris accumulation has exceeded a debris accumulation threshold indicating the vehicle 100 is in need of washing (e.g., the debris accumulation has exceeded a "dirty" threshold). For example, the threshold may be exceeded where the data from the internal debris accumulation sensors 131 indicate that current or torque to the implement motor 112 has exceeded a specified threshold for typical operating conditions.

The method 400 in accordance with embodiments of the present disclosure may further include activating the base station wash system at 440. In other words, methods may include performing a washing operation. For example, the wash nozzles 224 may expel water directed at the vehicle housing 102 or the undercarriage 160 of the vehicle 100. As part of a washing operation, the wash nozzles 224 may expel water directed at one or more wash zones (e.g., the wash zones 172, 174, 176, 178). The activating at 440 may include opening one or more of the flow control valves 226, as described herein.

The activating the base station wash system at 440 may be responsive to, for example, the moving the vehicle onto the base station (e.g., at 410) or the determining the debris accumulation is above a specified threshold (e.g., at 430). For another example, the activating at 440 may be responsive to the sensors detecting that the debris accumulation is over a specified dirty threshold. For yet another example, the activating the wash system at 440 may be responsive to the vehicle 100 moving onto or from the base station 200.

The method 400 of cleaning the vehicle 100 may optionally include activating the ground working implement 110, for example, while the wash system is active. Activating the ground working implement 110 may be desirable, for example, to increase ground working implement 110 surfaces exposed to the wash fluid expelled from the wash nozzles 224. In another example, activating the ground working implement 110 while the wash system is active may be desirable to expel wash fluid from the ground working implement 110 toward other surfaces of the vehicle 100, such as surfaces of the wheels 106, 108. In yet another example, activating the ground working implement 110 after a washing operation has been completed may be desirable to expel wash fluid from the surface of the ground working implement 110 to dry the ground working implement 110.

Activating the ground working implement 110 may be responsive to, for example, the wash system activating (e.g., at 440) or the wash system being active. For another example, activating the ground working implement 110 may be responsive to the wash system deactivating or a washing operation ending. For yet another example, activating the ground working implement 110 may be continuous or intermittent during a washing operation, such as activating for 5 seconds after every 10 seconds of the washing operation or activating for 10 seconds after every 30 seconds of the washing operation. For still another example, activating the ground working implement 110 may be responsive to sensors detecting specified surfaces (e.g., surfaces of the wheels 106, 108 or surfaces of the undercarriage) or components of the vehicle 100 (e.g., the ground working implement) are in need of washing.

The method 400 may further include detecting debris accumulation on the vehicle at 450, which may be done while a washing operation is in progress. For example, the removal of debris accumulation from the vehicle 100 may be detected by the internal debris accumulation sensors 131, the external debris accumulation sensors 135, a vision sensor, or a sensor that monitors accumulated operating time of the washing operation. In one or more embodiments, the detecting at 450 may be continuous or done at intervals during a washing operation. In other embodiments, the detecting at 450 may be responsive to a washing operation ending. In other words, the detecting at 450 may be performed at the end of a wash operation to detect whether the operation successfully removed enough debris to reach a specified "clean" threshold. If the clean threshold is not reached, a subsequent wash operation may be performed.

Some embodiments may include determining at 460 that the debris accumulation has been reduced below a specified debris accumulation threshold. The debris accumulation threshold may be indicative that the vehicle 100 is sufficiently clean or that accumulated debris has been sufficiently removed (e.g., debris has been sufficiently removed to reach the specified "clean" threshold). In other words, determining that substantially all accumulated debris has been removed. For example, the clean threshold may be reached where the data from the external debris accumulation sensors 135 indicates that the accumulated debris has been removed from one or more portions or zones of the vehicle (e.g., the undercarriage 160). Additionally or alternatively, the clean threshold may be based upon a timer indicating that vehicle washing has occurred for a specified time, or duration.

In one or more embodiments, the method 400 may include deactivating at 470 the base station 200 wash system. In other words, the method 400 may include ending a washing operation. As part of deactivating the wash system, the wash nozzles 224 may stop expelling water. Such steps may include, for example, closing one or more of the flow control valves 226. The deactivating at 470 may be responsive, for example, to the determining at 460.

The method 400 may further include removing at 480 the vehicle 100 from the base station 200, for example, in response to ending a washing operation. Additionally or alternatively, the method 400 may include removing at 480 the vehicle 100 from the base station 200 during a washing operation. The removing at 480 may be responsive, for example, to the deactivating the base station 200 wash system at 470 or the determining at 460 that the debris accumulation is below the specified clean threshold. In some embodiments, the vehicle 100 may be removed from and moved back onto the base station 200 one or more times over the course of a washing operation (i.e., responsive to the activating the base station 200 wash system at 440).

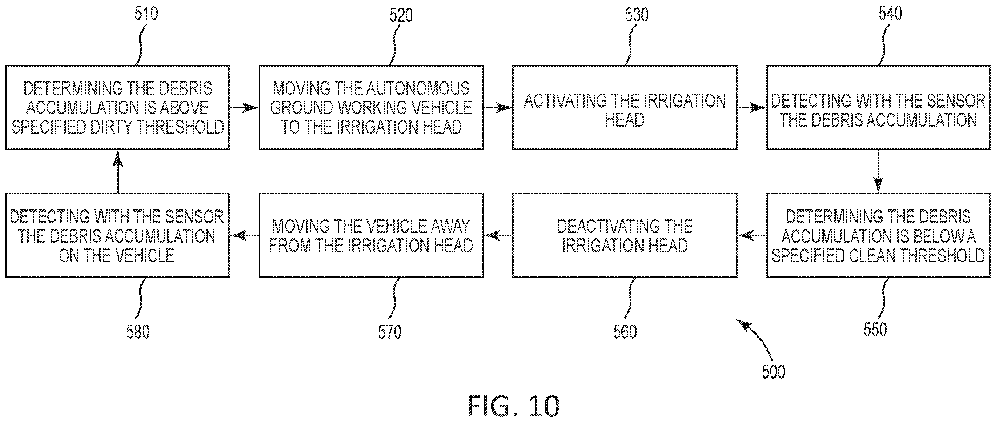

FIG. 10 shows another illustrative method 500 for washing the autonomous ground working vehicle 100 in accordance with embodiments of the present disclosure. While the method 500 is primarily discussed and depicted as independent of the method 400, it will be apparent in light of the disclosure that methods in accordance with the present disclosure may include one or more steps of both the method 500 and the method 400. Furthermore, the steps of either of the methods 400, 500 may be performed in any suitable order and may be responsive to steps from either of the methods 400, 500. Moreover, discussion of the steps of the method 400 may equally describe the steps of the method 500, unless otherwise indicated. Likewise, discussion of the steps of the method 500 may equally describe the steps of the method 400, unless otherwise indicated.

Embodiments of the method 500 according to the present disclosure may include determining, at 510, that debris accumulation (e.g., on the vehicle 100) has exceeded a specified debris accumulation threshold indicating the vehicle 100 is in need of washing (i.e., the dirty threshold is exceeded).

The method 500 may include moving the vehicle 100 to an irrigation head of a sub-surface irrigation system at 520, for example, in response to a signal or command from the vehicle controller 120 or the base station controller 230 that a washing operation is needed. The moving the vehicle 100 to the irrigation head at 520 may be part of an autonomous operation by the vehicle 100 (i.e., the moving at 520 may be done autonomously or automatically). The vehicle 100 may move, for example, in front of the irrigation head (e.g., in front of the nozzle of the irrigation head so the irrigation head may direct water at the vehicle 100). Additionally or alternatively, the vehicle 100 may move over the irrigation head (e.g., so the irrigation head may direct water at portions of the undercarriage 160). The relative position of the vehicle 100 and the irrigation head may be determined, for example, by the vehicle controller 120 using data from the GPS receiver 116 or the encoder 118.

The method 500 in accordance with embodiments of the present disclosure may further include activating the irrigation head (e.g., the irrigation head 254) of the sub-surface irrigation system (e.g., the sub-surface irrigation system 250) at 530. In other words, methods may include running a washing operation using the irrigation head as the wash system, or as a portion of the wash system. For example, the irrigation head may expel fluid (e.g., water) directed at the vehicle housing 102 or the undercarriage 160 of the vehicle 100. As part of a washing operation, the irrigation head may expel fluid directed at one or more wash zones (e.g., the wash zones 172, 174, 176, 178). Fluid expelled from the irrigation head may be directed at one or more wash zones, for example, by rotating or oscillating the irrigation head. In another example, fluid may be directed at one or more wash zones by moving the vehicle 100 relative to the irrigation head.

The method 500 may further include detecting debris accumulation on the vehicle 100 with a sensor at 540, which may be done while a washing operation is in progress. For example, the removal of debris accumulation from the vehicle 100 may be detected by sensors associated with the vehicle 100, sensors associated with the base station 200, the internal debris accumulation sensors 131, the external debris accumulation sensors 135, a vision sensor, or a sensor that monitors accumulated operating time of the washing operation or other suitable sensors, such as those described herein.

In some embodiments, the method 500 may include determining at 550 that the debris accumulation has been reduced below a debris accumulation threshold indicating the vehicle 100 is sufficiently clean or that accumulated debris has been sufficiently removed (e.g., the specified clean threshold is reached).

One or more embodiments, the method 500 may include deactivating at 560 the irrigation head. In other words, the method 500 may include ending a washing operation.

The method 500 may still further include moving at 570 the vehicle 100 away from the irrigation head, for example, in response to ending a washing operation. Additionally or alternatively, the method 500 may include the moving at 570 the vehicle 100 away from the irrigation head during a washing operation.

The method 500 may also include detecting debris accumulation on the vehicle 100 at 580 using a sensor. Debris accumulation may be detected at 580, for example, during autonomous working operations or while the vehicle 100 is resting in the base station 200. Debris accumulation may be detected at 580, for example, by sensors associated with the vehicle 100, the internal debris accumulation sensors 131, the external debris accumulation sensors 135, a vision sensor, a sensor that monitors accumulated operating time of the vehicle 100, or a sensor that monitors accumulated distance that the vehicle 100 has traveled. In some embodiments, debris accumulation may be detected by sensors associated with the base station 200.

Illustrative embodiments are described and reference has been made to possible variations of the same. These and other variations, combinations, and modifications will be apparent to those skilled in the art, and it should be understood that the claims are not limited to the illustrative embodiments set forth herein.

## Claims

1. An autonomous ground working vehicle system (50) comprising:
an autonomous ground working vehicle (100) comprising an undercarriage (160); and
a base station (200) configured to receive the vehicle, the base station comprising:
a fluid connector (220) adapted to fluidly couple to a fluid source (222);
a platform (204) comprising at least one wash nozzle coupled to the fluid connector by a fluid conduit (228) associated with the platform; and
a flow control valve (226) positioned along the fluid conduit, wherein the valve, when in a first position, obstructs flow of fluid from the fluid source to the wash nozzle, and when in a second position, directs the fluid from the fluid source to the wash nozzle such that the nozzle is able to expel the fluid toward the undercarriage of the vehicle;
**characterized in that** the at least one wash nozzle is a pop-up wash nozzle (224) translatable between a retracted position and an extended position.

2. The system (50) of claim 1, wherein the valve (226) is controlled by an electronic controller (120, 230) associated with one or both of the vehicle (100) and the base station (200).

3. The system (50) of claim 1, further comprising an electronic controller (120, 230) associated with one or both of the vehicle (100) and the base station (200), the controller configured to move the pop-up wash nozzle (224) between the retracted position and the extended position.

4. The system (50) of any one of claims 1-3, wherein the valve (226) is manually operable.

5. The system (50) of any one of claims 1-4, wherein the pop-up wash nozzle (224) is translatable between the retracted position and the extended position by fluid pressure provided by the fluid source (222).

6. The system (50) of any one of claims 1-5, wherein the fluid source (222) comprises a water tap, a sub-surface irrigation line, or both.

7. The system (50) of any one of claims 1-6, wherein the vehicle (100) further comprises a ground working implement (110), and wherein the ground working implement is operable when the flow control valve (226) is in the second position.

8. The system (50) of any one of claims 1-7, further comprising at least one debris accumulation sensor (131, 135).

9. The system (50) of claim 8, wherein the at least one debris accumulation sensor (131, 135) comprises one or more of a vision sensor, a sensor that monitors accumulated operating time of the vehicle, a sensor that monitors accumulated distance that the vehicle has traveled, a sensor that measures changes in current or torque of an electric motor of the vehicle, a sensor that measures changes in current or torque of an electric implement motor of the vehicle, a sensor that measures changes in current or torque of an electric drive motor of the vehicle, or any combination thereof.

10. The system (50) of any one of claims 8-9 further comprising:
an electronic controller (120, 230) operatively coupled to each of the flow control valve (226) and the debris accumulation sensor (131, 135), the controller configured to:
monitor data provided by the debris accumulation sensor; and
responsive to the data provided by the debris accumulation sensor, automatically control the flow control valve;
wherein the debris accumulation sensor is associated with one or both of the vehicle (100) and the base station (200).

11. The system (50) of any one of claims 8-10, wherein the vehicle (100) further comprises a ground working implement (110) powered by an implement motor (112), and wherein the debris accumulation sensor (131, 135) comprises a sensor that measures changes in current or torque of the implement motor.

12. The system (50) of any one of claims 8-11, wherein the vehicle (100) comprises a drive wheel (106, 108) driven by a drive motor (104), and wherein the debris accumulation sensor (131, 135) comprises a sensor that measures changes in current or torque of the drive motor.

13. The system (50) of any one of claims 1-12 further comprising:
a base station housing (208) defining an opening (212) adapted to align with an irrigation head (254) of a sub-surface irrigation system (250), the irrigation head configured to expel fluid to wash the vehicle (100) when the vehicle is located on the base station (200).

14. The system (50) of claim 13, wherein the irrigation head (254) is further configured to expel fluid to wash the undercarriage (160) of the vehicle when the vehicle (100) is located on the base station (200).

15. The system (50) of any one of claims 13-14, further comprising:
an electronic system controller (120, 230) associated with one or both of the vehicle (100) and the base station (200); and
an electronic irrigation controller (256) configured to control operation of the irrigation head (254) and to communicate with the system controller to coordinate: a vehicle wash mode when the vehicle (100) is received by the base station (200); and an irrigation mode when the vehicle is not received by the base station.

## Patentansprüche

1. Autonomes Bodenarbeitsfahrzeugsystem (50), umfassend:
ein autonomes Bodenarbeitsfahrzeug (100) mit einem Unterbau (160); und
eine Basisstation (200), die zum Aufnehmen des Fahrzeugs konfiguriert ist, wobei die Basisstation umfasst:
einen Fluidanschluss (220), der zur fluidtechnischen Koppelung mit einer Fluidquelle (222) ausgelegt ist;
eine Plattform (204), die mindestens eine Waschdüse umfasst, die über eine der Plattform zugeordnete Fluidleitung (228) mit dem Fluidanschluss gekoppelt ist; und
ein Durchflussregelventil (226), das entlang der Fluidleitung angeordnet ist, wobei das Ventil, wenn es sich in einer ersten Position befindet, den Fluidstrom von der Fluidquelle zur Waschdüse unterbricht, und wenn es sich in einer zweiten Position befindet, das Fluid von der Fluidquelle zur ausfahrbaren Waschdüse leitet, sodass die Düse das Fluid in Richtung des Unterbaus des Fahrzeugs ausstoßen kann;
**dadurch gekennzeichnet, dass** die mindestens eine Waschdüse eine ausfahrbare Waschdüse (224) ist, die zwischen einer eingefahrenen Position und einer ausgefahrenen Position verschiebbar ist.

2. System (50) nach Anspruch 1, wobei das Ventil (226) einer elektronischen Steuerung (120, 230) zugeordnet ist, die dem Fahrzeug (100) und/oder der Basis (200) zugeordnet ist.

3. System (50) nach Anspruch 1, das ferner eine elektronische Steuerung (120, 230) umfasst, die dem Fahrzeug (100) und/oder der Basisstation (200) zugeordnet ist, wobei die Steuerung so konfiguriert ist, dass sie die ausfahrbare Waschdüse (224) zwischen der eingefahrenen Position und der ausgefahrenen Position bewegt.

4. System (50) nach einem der Ansprüche 1-3, wobei das Ventil (226) manuell betätigbar ist.

5. System (50) nach einem der Ansprüche 1-4, wobei die ausfahrbare Waschdüse (224) durch den von der Fluidquelle (222) bereitgestellten Fluiddruck zwischen der eingefahrenen Position und der ausgefahrenen Position verschiebbar ist.

6. System (50) nach einem der Ansprüche 1-5, wobei die Fluidquelle (222) einen Wasserhahn, eine unterirdische Bewässerungsleitung oder beides umfasst.

7. System (50) nach einem der Ansprüche 1-6, wobei das Fahrzeug (100) ferner eine Bodenbearbeitungsvorrichtung (110) umfasst, und wobei die Bodenbearbeitungsvorrichtung betätigbar ist, wenn sich das Durchflussregelventil (226) in der zweiten Position befindet.

8. System (50) nach einem der Ansprüche 1 bis 7, das ferner mindestens einen Schmutzansammlungssensor (131, 135) umfasst.

9. System (50) nach Anspruch 8, wobei das System mindestens einen Schmutzansammlungssensor (131, 135) umfasst, der eines oder mehrere der Folgenden umfasst: einen Bildsensor, einen Sensor, der die kumulierte Betriebszeit des Fahrzeugs überwacht, einen Sensor, der die kumulierte zurückgelegte Strecke des Fahrzeugs überwacht, einen Sensor, der Änderungen des Stroms oder des Drehmoments eines Elektromotors des Fahrzeugs misst, einen Sensor, der Änderungen des Stroms oder des Drehmoments eines elektrischen Vorrichtungsmotors des Fahrzeugs misst, einen Sensor, der Änderungen des Stroms oder des Drehmoments eines elektrischen Antriebsmotors des Fahrzeugs misst, oder eine beliebige Kombination davon.

10. System (50) nach einem der Ansprüche 8-9, das ferner umfasst:
eine elektronische Steuereinheit (120, 230), die funktionsmäßig mit dem Durchflussregelventil (226) und dem Schmutzansammlungssensor (131, 135) gekoppelt ist, wobei die Steuereinheit für Folgendes konfiguriert ist:
Überwachen von Daten, die vom Schmutzansammlungssensor bereitgestellt werden; und
als Reaktion auf die vom Schmutzansammlungssensor bereitgestellten Daten, automatisches Steuern des Durchflussregelventils;
wobei der Schmutzansammlungssensor dem Fahrzeug (100) und/oder der Basis (200) zugeordnet ist.

11. System (50) nach einem der Ansprüche 8-10, wobei das Fahrzeug (100) ferner eine Bodenbearbeitungsvorrichtung (110) umfasst, die von einem Vorrichtungsmotor (112) angetrieben wird, und wobei der Schmutzansammlungssensor (131, 135) einen Sensor umfasst, der Änderungen des Stroms oder des Drehmoments des Vorrichtungsmotors misst.

12. System (50) nach einem der Ansprüche 8-11, wobei das Fahrzeug (100) ein von einem Antriebsmotor (104) angetriebenes Antriebsrad (106, 108) umfasst, und wobei der Schmutzansammlungssensor (131, 135) einen Sensor umfasst, der Änderungen des Stroms oder des Drehmoments des Antriebsmotors misst.

13. System (50) nach einem der Ansprüche 1-12, das ferner umfasst:
ein Basisstationsgehäuse (208), das eine Öffnung (212) definiert, die so ausgelegt ist, dass sie mit einem Bewässerungskopf (254) eines unterirdischen Bewässerungssystems (250) ausgerichtet werden kann, wobei der Bewässerungskopf so konfiguriert ist, dass er Fluid ausstößt, um das Fahrzeug (100) zu reinigen, wenn sich das Fahrzeug auf der Basisstation (200) befindet.

14. System (50) nach Anspruch 13, wobei der Bewässerungskopf (254) ferner so konfiguriert ist, dass er Fluid ausstößt, um den Unterbau (160) des Fahrzeugs zu reinigen, wenn sich das Fahrzeug (100) auf der Basisstation (200) befindet.

15. System (50) nach einem der Ansprüche 13-14, das ferner umfasst:
eine elektronische Systemsteuerung (120, 230), die dem Fahrzeug (100) und/oder der Basisstation (200) zugeordnet ist; und
eine elektronische Sprühsteuerung (256), die dafür konfiguriert ist, den Betrieb des Sprühkopfes (254) zu steuern und mit der Systemsteuerung zu kommunizieren, um Folgendes zu koordinieren: einen Fahrzeugwaschmodus, wenn das Fahrzeug (100) von der Basis (200) empfangen wird; und einen Bewässerungsmodus, wenn das Fahrzeug nicht von der Basis empfangen wird.

## Revendications

1. Système de véhicule autonome de travail au sol (50) comprenant :
un véhicule autonome de travail au sol (100) comprenant un châssis de roulement (160), et
une station de base (200) conçue pour recevoir le véhicule, la station de base comprenant :
un raccord fluidique (220) adapté à être couplé fluidiquement à une source de fluide (222),
une plateforme (204) comprenant au moins une buse de lavage couplée au raccord fluidique par une conduite de fluide (228) associée à la plateforme, et
une vanne de régulation de débit (226) positionnée le long de la conduite de fluide, laquelle vanne, lorsqu'elle se trouve dans une première position, entrave l'écoulement de fluide depuis la source de fluide vers la buse de lavage, et lorsqu'elle se trouve dans une deuxième position, dirige le fluide depuis la source de fluide vers la buse de lavage, permettant à la buse d'expulser le fluide vers le châssis de roulement du véhicule ;
**caractérisé en ce que** l'au moins une buse de lavage est une buse de lavage escamotable (224) déplaçable en translation entre une position rétractée et une position étendue.

2. Système (50) selon la revendication 1, dans lequel la vanne (226) est commandée par un dispositif de commande électronique (120, 230) associé au véhicule (100) et/ou à la station de base (200).

3. Système (50) selon la revendication 1, comprenant en outre un dispositif de commande électronique (120, 230) associé au véhicule (100) et/ou à la station de base (200), le dispositif de commande étant conçu pour faire basculer la buse de lavage escamotable (224) entre la position rétractée et la position étendue.

4. Système (50) selon l'une quelconque des revendications 1 à 3, dans lequel la vanne (226) est actionnable manuellement.

5. Système (50) selon l'une quelconque des revendications 1 à 4, dans lequel la buse de lavage escamotable (224) est déplaçable en translation entre la position rétractée et la position étendue par une pression de fluide fournie par la source de fluide (222).

6. Système (50) selon l'une quelconque des revendications 1 à 5, dans lequel la source de fluide (222) comprend un robinet d'eau, une ligne d'irrigation souterraine ou les deux.

7. Système (50) selon l'une quelconque des revendications 1 à 6, dans lequel le véhicule (100) comprend en outre un outil de travail au sol (110), et dans lequel l'outil de travail au sol est actionnable quand la vanne de régulation de débit (226) se trouve dans la deuxième position.

8. Système (50) selon l'une des revendications 1 à 7, comprenant en outre au moins un capteur d'accumulation de débris (131, 135).

9. Système (50) selon la revendication 8, dans lequel l'au moins un capteur d'accumulation de débris (131, 135) comprend un ou plusieurs capteurs parmi un capteur de vision, un capteur surveillant le temps de fonctionnement cumulé du véhicule, un capteur surveillant la distance cumulée parcourue par le véhicule, un capteur mesurant les variations de courant ou de couple d'un moteur électrique du véhicule, un capteur mesurant les variations de courant ou de couple d'un moteur électrique d'outil du véhicule, un capteur mesurant les variations de courant ou de couple d'un moteur électrique d'entraînement du véhicule, ou toute combinaison de ceux-ci.

10. Système (50) selon l'une quelconque des revendications 8 et 9, comprenant en outre :
un dispositif de commande électronique (120, 230) couplé de manière fonctionnelle aussi bien à la vanne de régulation de débit (226) qu'au capteur d'accumulation de débris (131, 135), le dispositif de commande étant conçu pour :
surveiller des données fournies par le capteur d'accumulation de débris, et
en réaction aux données fournies par le capteur d'accumulation de débris, commander automatiquement la vanne de régulation de débit ;
ledit capteur d'accumulation de débris étant associé au véhicule (100) et/ou à la station de base (200).

11. Système (50) selon l'une quelconque des revendications 8 à 10, dans lequel le véhicule (100) comprend en outre un outil de travail au sol (110) actionné par un moteur d'outil (112), et dans lequel le capteur d'accumulation de débris (131, 135) comprend un capteur qui mesure les variations de courant ou de couple du moteur d'outil.

12. Système (50) selon l'une quelconque des revendications 8 à 11, dans lequel le véhicule (100) comprend une roue motrice (106, 108) entraînée par un moteur d'entraînement (104), et dans lequel le capteur d'accumulation de débris (131, 135) comprend un capteur qui mesure les variations de courant ou de couple du moteur d'entraînement.

13. Système (50) selon l'une quelconque des revendications 1 à 12, comprenant en outre :
un boîtier de station de base (208) délimitant une ouverture (212) adaptée à s'aligner sur une tête d'irrigation (254) d'un système d'irrigation souterraine (250), la tête d'irrigation étant configurée pour expulser du fluide afin de laver le véhicule (100) lorsque le véhicule se situe sur la station de base (200).

14. Système (50) selon la revendication 13, dans lequel la tête d'irrigation (254) est en outre conçue pour expulser du fluide afin de laver le châssis de roulement (160) du véhicule lorsque le véhicule (100) se situe sur la station de base (200).

15. Système (50) selon l'une quelconque des revendications 13 et 14, comprenant en outre :
un dispositif de commande électronique de système (120, 230) associé au véhicule (100) et/ou à la station de base (200), et
un dispositif de commande électronique d'irrigation (256) conçu pour commander le fonctionnement de la tête d'irrigation (254) et pour communiquer avec le dispositif de commande de système afin de coordonner : un mode de lavage du véhicule lorsque le véhicule (100) est reçu dans la station de base (200), et un mode d'irrigation lorsque le véhicule n'est pas reçu dans la station de base.
